# EUROPEAN PATENT SPECIFICATION

(11) **EP 4 084 602 B1**
(45) Date of publication and mention of the grant of the patent: **02.08.2023**
(21) Application number: 20839351.2
(22) Date of filing: 29.12.2020
(51) Int. Cl.: A01G 2/10, A01G 24/18

(54) **METHOD OF PROPAGATING A CANNABIS CUTTING**
VERFAHREN ZUR VERBREITUNG EINES CANNABIS-SCHNITTES
PROCÉDÉ DE PROPAGATION D'UNE DÉCOUPE DE CANNABIS

(30) Priority: 30.12.2019 US 201916730287; 30.12.2019 EP 19219996
(43) Date of publication of application: 09.11.2022
(73) Proprietor: ROCKWOOL A/S, 2640 Hedehusene (DK)
(72) Inventor: JANSSEN, Frank, 2640 Hedehusene (DK)
(74) Representative: Gill Jennings & Every LLP
(86) International application number: PCT/EP2020/087981
(87) International publication number: WO 2021/136781

(56) References cited:
- CN-A- 109 452 154
- US-A1- 2019 037 792
- US-B2- 9 609 813
- Brian Whipker ET AL: "Optimizing Electrical Conductivity (EC) in Cannabis Cultivation - Cannabis Business Times", , 30 April 2019 (2019-04-30), XP055689089, Retrieved from the Internet: URL:https://www.cannabisbusinesstimes.com/ article/optimizing-electrcal-conductivity- ec/ [retrieved on 2020-04-24]
- Anonymous: "How To Grow Marijuana On Rockwool - Greenman's Page", , 13 February 2019 (2019-02-13), XP055689188, Retrieved from the Internet: URL:http://www.greenmanspage.com/rockwool/ [retrieved on 2020-04-24]
- Anonymous: "Growing cannabis in Rockwool- Alchimia Grow Shop", , 12 December 2016 (2016-12-12), XP055785909, Retrieved from the Internet: URL:https://www.alchimiaweb.com/blogen/gro w-cannabis-rockwool/#4.Howtorootcuttingsin Rockwool [retrieved on 2021-03-15] & Anonymous: "Growing cannabis cuttings- Alchimia Grow Shop", , 28 May 2015 (2015-05-28), XP055785916, Retrieved from the Internet: URL:https://www.alchimiaweb.com/blogen/gro wing-marijuana-cuttings/ [retrieved on 2021-03-15]

## Description

### Field of the invention

The present invention is directed to a method of propagating cannabis cuttings in a growth substrate comprising man-made vitreous fibres bonded with a cured binder composition.

### Background of the invention

Cannabis is a genus of flowering plants in the family Cannabaceae, with three recognised species: *Cannabis sativa; Cannabis indica* and *Cannabis ruderalis.* In recent years, cannabis has been investigated and used for medicinal purposes. Cannabis contains cannabinoids which can be used medicinally, including tetrahydrocannabinol (THC) and cannabidiol (CBD). Cannabis has been used to treat, *inter alia,* nausea and vomiting (for example during chemotherapy), chronic pain and muscle spasms, and epilepsy.

It is known to grow cannabis indoors and in large-scale greenhouses, in order to optimise growth conditions and obtain a good yield. US 2017/0283333 A1 discloses growing vegetables and medicinal plants, such as medical cannabis, hydroponically.

Cannabis is an annual plant which completes its life cycle within one year or less and is dioecious, having both male and female plants. Medicinal cannabis can be reproduced sexually or asexually. Seeds are the product of sexual propagation and cuttings (also called clones) are the results of asexual propagation. Cloning involves cutting a growing branch to obtain a "cutting"'; placing the cutting in a growing medium and allowing the cutting to grow and develop roots. Clones are taken from female plants with desirable medicinal qualities called mother plants. Essentially, cloning is taking one cell of a plant and promoting its growth into a plant: the new plant shares the same DNA and is a copy of the mother plant.

Asexual propagation (also called cloning) is particularly preferred for medicinal cannabis for predictability and uniformity. In order to meet regulations for medicinal cannabis, it is often necessary in jurisdictions to have very closely controlled growing conditions. For example, the final harvested product must be tested to ensure that no undesirable components are present (such as pesticides or bacteria) and that the required levels of cannabinoids are met.

Typically propagation is the first stage in growing medicinal cannabis. Cuttings are taken and grown until a sufficient number of roots develop. The propagated cuttings are then moved to the next phase of growing, which is considered a separate growing process. During propagation, it is desirable to achieve the required number of cuttings with the highest success rate (i.e. the required root development for the nest stage). It is also desirable to have the propagated cuttings ready at the right moment. This ensures that the highest number of propagated cuttings proceed to the next growing stage together, and at the correct time.

Therefore, it would be desirable to maximise the number of healthy and viable propagated cuttings so that an increased percentage of cuttings develop roots and can be used in the next stage of growing. This would ultimately lead to a higher yield of final product (e.g. medicinal cannabis).

In addition, it would be desirable to increase the uniformity of propagated cuttings, as this increases the quality of the end product (e.g. medicinal cannabis).

Furthermore, it would be desirable to speed up the propagation process, as typically the slower the process, the lower the quality of the propagated cuttings. Therefore, it would be desirable to speed up propagation in order to achieve a high success rate of cuttings and more uniform cuttings.

WO 2016/061672 A1 discloses a method for optimising yield and accelerating growth of medicinal cannabis. However, this method is complicated and expensive as it requires a growth chamber containing a climate controlled microclimate under negative pressure.

CN109452154 discloses a hemp indoor cutting seedling method, which comprises (1) soaking rock wool blocks in water with the pH value of 5.0-5.7; then soaking the mixture in a nitrogen-phosphorus-potassium compound nutrient solution with the pH value of 5.7-6.0; (2) soaking hemp cutting shoots in a rooting agent, inserting into the rock wool blocks, and culturing seedlings indoors under the conditions of 60-65 humidity, 22-24 °C temperature, 55-65 µmol/(m²·s) light intensity and a density ratio of red light to blue light of 0.55:1-0.63: 1; and (3) spraying amino acid foliar fertilizer twice a day, wherein the concentration of the foliar fertilizer is 0.05-0.1 %; supplementing water and nutrition in the matrix.

Therefore, an aim of the present invention is to provide a method of propagating cannabis cuttings which results in increased output by having a quicker propagation process, more uniform propagated cuttings and a higher number of propagated cannabis cuttings that can proceed to the next growing stage. It is an aim of the invention to provide such a method that is efficient and economical.

### Summary of the invention

In a first aspect of the invention, there is disclosed a method of propagating a cannabis cutting, comprising the steps of:
- providing a coherent growth substrate comprising man-made vitreous fibres (MMVF) bonded with a cured binder composition, wherein the growth substrate has a density in the range of 60 kg/m³ to 70 kg/m³ ;
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate.

In a second aspect of the invention, there is disclosed use of a coherent growth substrate for propagating a cannabis cutting, comprising the steps of:
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate;
wherein the coherent growth substrate comprises man-made vitreous fibres (MMVF) bonded with a cured binder composition; and wherein the growth substrate has a density in the range of 60 kg/m³ to 70 kg/m³.

The present inventor has discovered that the method of the present invention increases the number of propagated cuttings that can proceed to the next stage of growing, resulting in a higher yield. Furthermore, the method of the present invention increases the uniformity of the cuttings which ultimately leads to a more uniform and therefore higher quality end product. Uniformity and quality is of particular importance for medicinal cannabis due to the high standards required for pharmaceutical products. In addition, the method of the present invention enables the step of propagation to be achieved in a shorter amount of time, which results in higher quality and uniformity of the end product. In particular, these benefits are achieved by having a growth substrate with a density in the range of 60-70 kg/m³, and inserting the cutting into the substrate at a location that does not have a seed hole. In addition, this is achieved by providing the growth substrate and cannabis cutting with a nutrient solution having an EC of 1.6 to 2.4 mS/cm.

### Description of the figures

Figures 1A to 1D show the results of an experiment on growth substrates with varying densities.
Figures 2A to 2C show the results of an experiment on growth substrates with different nutrient solutions after 10 days.
Figures 3A to 3C show the results of an experiment on growth substrates with different nutrient solutions after 12 days.
Figures 4A to 4C show the results of an experiment on growth substrates with different nutrient solutions after 14 days.
Figure 5 shows a photograph of cannabis cuttings.
Figure 6 shows a photograph of propagated cannabis cuttings.

### Detailed description

The present invention is directed to a method of propagating a cannabis cutting, comprising the steps of:
- providing a coherent growth substrate comprising man-made vitreous fibres (MMVF) bonded with a cured binder composition, wherein the growth substrate has a density in the range of 60 to 70 kg/m³;
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate.

In the present invention, the phrase "method of propagation" has its normal meaning in the field of plant growth substrates. Propagation is the first stage in growing cannabis. Propagation is complete, and the cuttings are ready for the next stage of growing, when a root system has developed. In a root system, roots grow through the growth substrate and at least three roots have grown such that they protrude out of the side surfaces or bottom surface of the substrate. The term propagation is very well-understood in the art of growth substrates.

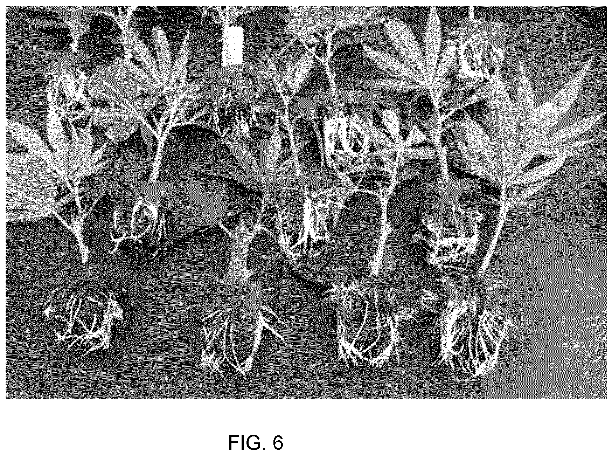

Figure 6 shows a photograph of propagated cannabis cuttings that are ready for the next stage of growing. All cuttings have developed a root system, with at least three roots protruding from the side or bottom surfaces of the growth substrate.

Typically, propagation lasts for 3 to 4 weeks. However, in the present invention, propagation preferably lasts for 2 to 3 weeks, preferably 2 weeks or less. This has the significant advantage of leading to more uniform propagated cuttings, resulting in an end product with higher quality. In addition, speeding up the propagation process means that more cuttings can be produced in a year, thus increasing yield.

The term "cannabis" refers to any plants from the Cannabaceae family such as *Cannabis sativa*, *Cannabis indica* and *Cannabis ruderalis.* Cannabis plants are also called marijuana or hemp. Preferably, the present invention relates to medicinal cannabis. By medicinal cannabis it is meant cannabis that meets the required regulations for being used to treat certain conditions.

In the present invention, the term "cutting" has its normal meaning in the art. It refers to a part of a plant which is cut from a growing branch or stem. A cutting, when initially cut from a plant, does not have any roots. Once propagated, a cutting will be a clone of the plant from which it was cut (called the mother plant).

Preferably, cuttings taken from the mother plant are between 10 to 14 days old, that is, the stem from which the cutting is taken developed between 10 to 14 days previous to the step of cutting. The mother plant may be older than 10 to 14 days. Preferably, the cuttings are 8 to 15 cm in length, more preferably 10 to 12 cm in length. Preferably the cuttings have a stem diameter of 3 to 8 mm, most preferably 5 mm. The inventors discovered that when the cuttings have the above length and/or diameter and/or age, this leads to fast development of the roots. Preferably all cuttings have the same height and age to maximise uniformity and quality of the end product.

In a preferred embodiment, the cutting is cut from the mother plant at an angle of 180° such that it could sit flat on a horizontal surface, preferably, after taking the cutting from the mother plant, lower and upper leaves are trimmed to minimize loss via evaporation.

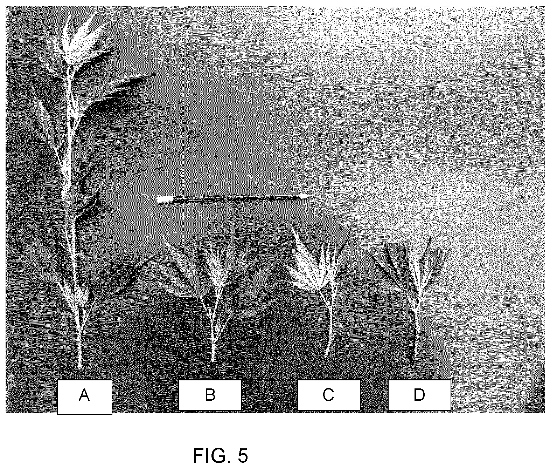

Figure 5 shows four cuttings from a cannabis mother plant. Cutting A is a raw cutting taken from the mother plant. Cutting B is the shoot tip with a flat cut. Cutting C is a prepared cutting with any lower stems removed. Cutting D is a prepared cutting with larger leaves trimmed to restrict evaporation.

In the present invention, a coherent growth substrate comprising man-made vitreous fibres (MMVF) is provided. The MMVF may be made by any of the methods known to those skilled in the art for production of MMVF growth substrate products. In general, a mineral charge is provided, which is melted in a furnace to form a mineral melt. The melt is then formed into fibres by means of rotational fiberisation. Preferably the coherent growth substrate is formed of man-made vireos fibres.

The melt may be formed into fibres by external centrifuging e.g. using a cascade spinner, to form a cloud of fibres. Alternatively, the melt may be formed into fibres by internal centrifugal fiberisation e.g. using a spinning cup, to form a cloud of fibres.

Typically, these fibres are then collected to form a primary fleece or web, the primary fleece or web is then cross-lapped to form a secondary fleece or web. The secondary fleece or web is then cured and formed into a growth substrate.

Binder and optionally wetting agent are usually added at the fiberisation stage by spraying into the cloud of forming fibres. These methods are well known in the art.

The MMVF can be of the conventional type used for formation of known MMVF growth substrates. It can be glass wool or slag wool but is usually stone wool. Stone wool generally has a content of iron oxide at least 3% and content of alkaline earth metals (calcium oxide and magnesium oxide) from 10 to 40%, along with the other usual oxide constituents of mineral wool. These may include silica; alumina; alkali metals (sodium oxide and potassium oxide), titania and other minor oxides. In general it can be any of the types of man-made vitreous fibre which are conventionally known for production of growth substrates.

The geometric mean fibre diameter is often in the range of 1.5 to 10 microns, in particular 2 to 8 microns, preferably 3 to 6 microns as conventional.

Preferably the growth substrate product comprises at least 90 wt% man-made vitreous fibres by weight of the total solid content of the growth substrate. An advantage of having such an amount of fibres present in the growth substrate product is that there are sufficient pores formed between the fibres to allow the growth substrate product to hold water and nutrients for the cutting, whilst maintaining the ability for roots of the plants to permeate the growth substrate product. The remaining solid content may be made up primarily of binder and wetting agent.

The growth substrate product is in the form of a coherent mass. That is, the growth substrate is generally a coherent matrix of man-made vitreous fibres, which has been produced as such, but can also be formed by granulating a slab of mineral wool and consolidating the granulated material. A coherent mass is a single unified substrate.

The growth substrate product comprises a cured binder composition, often an organic binder, which is generally heat-curable. Preferably the growth substrate product comprises 1 to 10 wt% of binder based on the weight of the growth substrate product. More preferably, it comprises 2 to 6 wt%, most preferably 3 to 5 wt% binder.

The binder composition preferably comprises:
a) a sugar component, and
b) a reaction product of a polycarboxylic acid component and an alkanolamine component,
wherein the binder composition prior to curing contains at least 42% by weight of the sugar component based on the total weight (dry matter) of the binder components may be used in the present invention. This binder has the advantage of being formaldehyde-free and economical to produce.

The binder can be an organic hydrophobic binder, and in particular it can be a conventional heat-curable (thermosetting), binder of the type which has been used for many years in MMVF substrates (and other MMVF-based products). This has the advantage of convenience and economy. Thus, the binder is preferably a phenol formaldehyde resin or urea formaldehyde resin, in particular phenol urea formaldehyde (PUF) resin.

The binder may be a formaldehyde-free aqueous binder composition comprising: a binder component (A) obtainable by reacting at least one alkanolamine with at least one carboxylic anhydride and, optionally, treating the reaction product with a base; and a binder component (B) which comprises at least one carbohydrate, as disclosed in WO2004/007615. Binders of this type are hydrophilic.

WO97/07664 discloses a hydrophilic substrate that obtains its hydrophilic properties from the use of a furan resin as a binder. Binders of this type may be used in the present invention.

WO07129202 discloses a hydrophilic curable aqueous composition wherein said curable aqueous composition is formed in a process comprising combining the following components:
(a) a hydroxy-containing polymer,
(b) a multi-functional crosslinking agent which is at least one selected from the group consisting of a polyacid, salt(s) thereof and an anhydride, and
(c) a hydrophilic modifier;
wherein the ratio of (a):(b) is from 95:5 to about 35:65.

The hydrophilic modifier can be a sugar alcohol, monosaccharide, disaccharide or oligosaccharide. Examples given include glycerol, sorbitol, glucose, fructose, sucrose, maltose, lactose, glucose syrup and fructose syrup. Binders of this type can be used in the present invention.

The binder may be as described in WO 2017/114724, wherein the binder composition prior to curing comprises the following components:
a component (i) in the form of one or more compounds selected from
   - compounds of the formula, and any salts thereof: 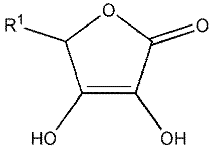
in which R1 corresponds to H, alkyl, monohydroxyalkyl, dihydroxyalkyl,
polyhydroxyalkyl, alkylene, alkoxy, amine;
   - compounds of the formula, and any salts thereof: 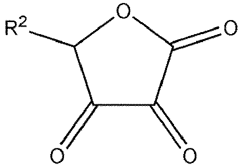
in which R2 corresponds to H, alkyl, monohydroxyalkyl, dihydroxyalkyl, polyhydroxyalkyl, alkylene, alkoxy, amine;
a component (ii) in the form of one or more compounds selected from the group of ammonia, amines or any salts thereof;
a component (iii) in the form of one or more carbohydrates.

The binder composition may be as described in WO 2017/114723 wherein the binder composition prior to curing comprises the following components:
- a component (i) in form of one or more carbohydrates;
- a component (ii) in form of one or more compounds selected from sulfamic acid, derivatives of sulfamic acid or any salt thereof.

The binder composition may be a composition comprising at least on hydrocolloid prior to curing. Preferably, the at least one hydrocolloid is selected from the group consisting of gelatin, pectin, starch, alginate, agar agar, carrageenan, gellan gum, guar gum, gum arabic, locust bean gum, xanthan gum, cellulose derivatives such as carboxymethylcellulose, arabinoxylan, cellulose, curdlan, β-glucan.

The growth substrate product can optionally include a wetting agent. This increases the amount of water that the growth substrate product can absorb. The use of a wetting agent in combination with a hydrophobic binder results in a hydrophilic growth substrate product. Therefore, preferably when the binder is hydrophobic, the growth substrate product comprises a wetting agent.

The binder can be hydrophilic. A hydrophilic binder does not require the use of as much wetting agent as a hydrophobic binder. However, a wetting agent in the invention can be used to increase the hydrophilicity of a hydrophilic binder in a similar manner to its action in combination with a hydrophobic binder. This means that the MMVF substrate will absorb a higher volume of water than if the wetting agent is not present.

The wetting agent can be cationic, anionic or non-ionic.

The growth substrate product may comprise a non-ionic wetting agent such as Rewopal^{®}.

Preferably, the growth substrate product comprises an ionic surfactant, more preferably an alkyl ether sulphate surfactant wetting agent. The wetting agent may be an alkali metal alkyl ether sulphate or an ammonium alkyl ether sulphate. Preferably the wetting agent is a sodium alkyl ether sulphate. A commercially available alkyl ether sulphate surfactant wetting agent is Texapon^{®}. The wetting agent may also be a linear alkyl benzene sulphonate anionic surfactant. These preferred wetting agents have been found to offer beneficial effects, particularly improving the hydrophilicity of the binder system.

Some non-ionic wetting agents may be washed out of the MMVF substrate over time. It is therefore preferable to use an ionic wetting agent, especially an anionic wetting agent, such as linear alkyl benzene sulphonate or Texapon ^{®}. These do not wash out of the MMVF substrate to the same extent.

Preferably the growth substrate product comprises 0.01 to 1 wt% wetting agent, preferably 0.05 to 0.5 wt% wetting agent, more preferably 0.1 to 0.3 wt% wetting agent.

The hydrophilicity of a sample of MMVF substrate can be measured by determining the sinking time of a sample. A sample of MMVF substrate having dimensions of 100x100x65 mm is required for determining the sinking time. A container with a minimum size of 200x200x200 mm is filled with water. The sinking time is the time from when the sample first contacts the water surface to the time when the test specimen is completely submerged. The sample is placed in contact with the water in such a way that a cross-section of 100x100 mm first touches the water. The sample will then need to sink a distance of just over 65mm in order to be completely submerged. The faster the sample sinks, the more hydrophilic the sample is. The MMVF substrate is considered hydrophilic if the sinking time is less than 120 s. Preferably the sinking time is less than 60 s. In practice, the MMVF substrate may have a sinking time of a few seconds, such as less than 10 seconds.

The growth substrate product preferably has a volume in the range 3 to 300 cm³.

The growth substrate product may have dimensions conventional for the product type commonly known as a plug. Preferably, the growth substrate product is a cube. Preferably the growth substrate product has a height of 30 to 50 mm, a width of 30 to 50 mm and a depth of 25 to 45 mm,

Alternatively the growth substrate may be of the type of plug described as the first coherent MMVF growth substrate in our publication WO2010/003677. In this case the volume of the growth substrate product is most preferably in the range to 10 to 40 cm³.

In another embodiment, the growth substrate product is preferably a cube with dimensions of 4 cm by 4 cm by 4 cm. Preferably, this product has a liquid-impermeable plastic covering surrounding its side surfaces only i.e. the bottom and top surfaces are not covered.

In an alternative embodiment, the growth substrate product is preferably cylindrical. Preferably it has a length 50 mm and a diameter or 46 mm, or a length of 40 mm and a diameter of 36 mm, or a length of 27 mm and a diameter of 22 mm.

In the present invention, the term "height" means the distance from the bottom surface to the top surface when the substrate is in use. The top surface is the surface that faces upwardly when the product is positioned as intended to be used and the bottom surface is the surface that faces downwardly (and on which the product rests) when the product is positioned as intended to be used. The term "length" means the longest distance between two sides i.e. the distance from one end to the other end when the substrate is in use. The term "width" is the distance between two sides, perpendicular to the length. These terms have their normal meaning in the art.

In the method according to the invention, the growth substrate product has a density in the range of 60 kg/m3 to 70 kg/m³. The inventors surprisingly discovered that when the density is in this range, there is an improved root development of the cuttings and the number of cuttings that can progress to the next growing stage is improved. In addition, the present inventors discovered that when the density of the growth substrate product is in this range, it is possible to insert the cannabis cutting into the substrate directly. This removes the requirement for having a seed hole, which leads to significant advantages as discussed below,

In a preferred embodiment, the density of the growth substrate is 65 kg/m³.

In the method of the invention, the cannabis cutting is inserted into the growth substrate at a location where the growth substrate does not have a seed hole. By this, it is meant that the cutting is not inserted into a seed hole. It is not excluded that the growth substrate has a seed hole at a different location from where the cutting is inserted. However, preferably the growth substrate does not comprise a seed hole.

The term seed hole has its normal meaning in the art, and can also be called a plant hole or cavity. A seed hole is an indentation in the top surface of a growth substrate, into which a seed or cutting is placed. By stating that the growth substrate is inserted into a location that does not have a seed hole it is meant that it is inserted into a location of the growth substrate that does not have any significant indentations i.e. does not have any indentations with a depth of greater than 3 mm, more preferably greater than 1 mm, most preferably greater than 0.5 mm.

The inventor surprisingly discovered that when the cannabis cutting is inserted into a location of the growth substrate that not have a seed hole, there is an improvement in root development and the number of cuttings that can progress to the next growing stage is improved. Due to the density of the growth substrate of the invention, the cutting can be inserted directly in the growth substrate and is able to develop roots optimally. Without being bound by theory, it is believed that the cutting is held in the growth substrate in a more optimal way, thus allowing more optimal growth conditions.

The method of the invention comprises the step of inserting the cannabis cutting into the growth substrate. Due to the porous nature of the MMVF growth substrate, and the density of 60 to 70 kg/m³, the cannabis cutting can be inserted by simply pushing the cut end of the cutting into the top surface. This can be done manually by hand or by use of automation equipment. Preferably, the cutting is inserted between 5 to 10 mm into the top surface of the growth substrate. Preferably, the cutting is inserted into the centre of the top surface. This ensures that the cutting can develop roots with maximum length in all directions. It therefore makes full use of the growth substrate volume.

In a preferred embodiment, prior to inserting the cutting into the growth substrate product, the cut end of the cutting is dipped into a rooting hormone, for example, an indole-3-butyric acid root hormone.

In the method of the present invention, the cannabis cutting in the growth substrate is provided with a nutrient solution having an electrical conductivity (EC) value between 1.6 and 2.4 mS/cm. Preferably, the nutrient solution has an EC value of 1.8 to 2.2 mS/cm, most preferably 2.0 mS/cm.

The EC value can be measured in accordance with ISO 7888 1985. The EC (electrical conductivity) is measured by determining the resistance of a solution (nutrients and water in the substrate) between two or more electrodes separated by a fixed distance. The EC can be measured using the water content meter described in WO2014122284.

Preferably the nutrient solution is supplied using an ebb flood system. This is well-known to the skilled person. For example, the growth substrate is placed on a bench or the floor and flooded with nutrient solution and left for 5 to 15 minutes, before draining. An ebb flood system works by temporarily making the cultivation tables "too full" (i.e. with an excess) of nutrient solution during a precalculated amount of time and then letting the solution flow back to the reservoir. The refluxed nutrient solution is checked and re-enriched with nutrients, after which it is reused by periodically pumping it back to the cultivation tables.

Preferably the growth substrate product is firstly saturated with water and nutrient solution having an EC value between 1.6 and 2.4 mS/cm. By saturated it is meant that the growth substrate product has a water content value of close to 100% i.e. 95 to 100%, that is, the growth substrate holds the maximum amount of water possible. This may be done by immersing the growth substrate in a nutrient bath, wherein the nutrient solution has an EC value between 1.6 and 2.4 mS/cm. Preferably the growth substrate is immersed for 5 to 15 minutes. Alternatively, the growth substrate may be saturated by using an ebb flood bench or floor.

The growth substrate product can be saturated before or after the cutting is inserted. Preferably the growth substrate product is saturated before the cutting is inserted.

After the preferred initial saturation, the growth substrate is irrigated to maintain a water content value in the range of 30 to 80% (expressed as a percentage of the total amount of water required to saturate the substrate).

It is desirable to wait for as long as possible to water the cuttings, so the roots develop in search for nutrients and water. It is undesirable to maintain a water content value of close to 100% in the substrate, to ensure the required amount of oxygen is achieved. This makes sure the roots are not drowned and do not develop root rot leading to plant necrosis.

Preferably the nutrient solution having an electrical conductivity (EC) value between 1.6 and 2.4 mS/cm is provided to the growth substrate product containing the cannabis cutting every 2 to 12 days. In the winter it is possible to wait until day 12 before watering once at the end of the propagation period. In summer, when temperatures are high and the radiation of the sun is high, water is preferably given more than once.

Preferably, during the method of the present invention, the substrate is irrigated only three times or twice or once.

The growth substrate may comprise further additives, such as a controlled-release fertiliser.

The present invention also discloses use of a coherent growth substrate for propagating a cannabis cutting, comprising the steps of:
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate;
wherein the coherent growth substrate comprises man-made vitreous fibres (MMVF) bonded with a cured binder composition; and wherein the growth substrate has a density in the range of 60 kg/m³ to 70 kg/m³.

This embodiment of the invention may have any of the additional features described above for the method of the invention.

### Examples

### Experiment 1

A comparative experiment was designed to identify the effect of inserting the cannabis cutting into a location where the growth substrate does not have a seed hole.

MMVF growth substrates having a density of 65 kg/m³ were compared with and without seed/plant holes.

Two strains of cannabis were investigated - Powerplant and Afghani.

First, cuttings were made from the same mother plant for each strain. The cuttings were then inserted into the growth substrates. For the growth substrates with a seed/plant hole, the cuttings were inserted into the hole. For growth substrates without a seed/plant hole, the cuttings were inserted into the top face of the substrate.

The cuttings were supplied with a feed solution having an EC value of 2.4 mS/cm and a pH of 5.5.

The growth substrates were analysed after 13 days, and categorised according to the following three options:
□ No roots visible = no roots
□ 1 to 3 visible roots = root tips
□ 3 or more roots = ready

### Stage 1 (after 13 days)

| **Number of Substrates** | **Strain** | **Design** | **Ready** | **Root tips** | **No roots** |
|---|---|---|---|---|---|
| 40 | Powerplant | No plant hole | 17 (42.5%) | 8 (20%) | 15 (37.5%) |
| 40 | Powerplant | Plant hole | 5 (12.5%) | 7 (17.5%) | 28 (70%) |
| 40 | Afghani | No plant hole | 24 (60%) | 6 (15%) | 10 (25%) |
| 40 | Afghani | Plant hole | 20 (50%) | 7 (17.5%) | 13 (32.5%) |

After 13 days, it can be seen that for both strains of cannabis, the percentage of cuttings which were ready for the next stage was significantly higher for substrates without seed/plant holes. Equally, the number of cuttings which did not develop any roots was significantly higher for growth substrates with seed/plant holes. Therefore, the data show that the effect of not having a seed/plant hole is an improvement in root development and the number of cuttings that can progress to the next growing stage.

### Experiment 2

An experiment was designed to investigate the effect of having a density in the range of 60-70 kg/m³.

MMVF growth substrates with a density of 65 kg/m³ ("GC65") were compared with MMVF growth substrates having a density of 75 kg/m³ ("GC75").

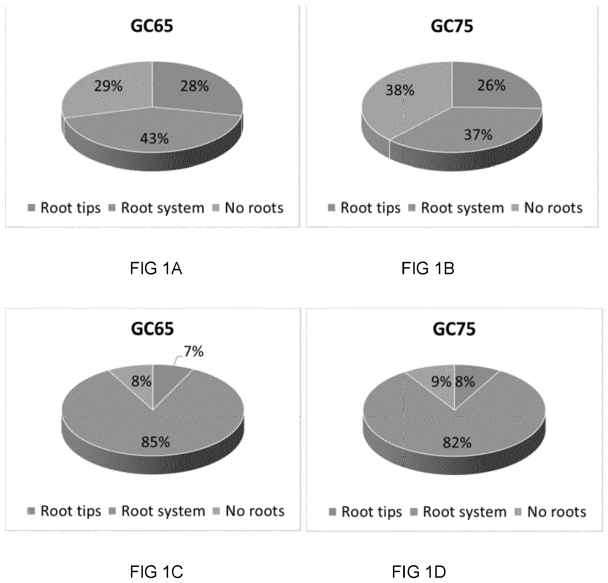

The results are shown in Figures 1A to 1D. Figures 1A and 1B show the results after 10 days, and Figures 1C and 1D show results after 14 days. The growth substrates were categorised after 10 and 14 days according to the following:
□ No roots visible = no roots
□ 1 to 3 visible roots = root tips
□ 3 or more roots = root system

The growth substrates according to the invention, with a density of 65 kg/m³, had a higher percentage of cuttings with root systems and roots tips after 10 days. The same was true after 14 days.

Therefore, the data show that the effect of a density in the range of 60-70 kg/m³ is an improvement in root development and the number of cuttings that can progress to the next growing stage.

### Experiment 3

An experiment was carried out to investigate the effect of different nutrient solutions. Three solutions were tested: EC= 1.5; EC= 2.0; EC= 2.5 mS/cm.

Cuttings were inserted into growth substrates having a density of 65 kg/m3. The cuttings were first dipped in root hormone (Clonex^{®} IBA gel 0.3%) and then inserted into the substrates. The substrates were irrigated on days 2, 4, 6, 8, 10 and 12 with different solutions (EC 1.5, 2.0, 2.5 mS/cm) and supplied with artificial light for 18 hours a day.

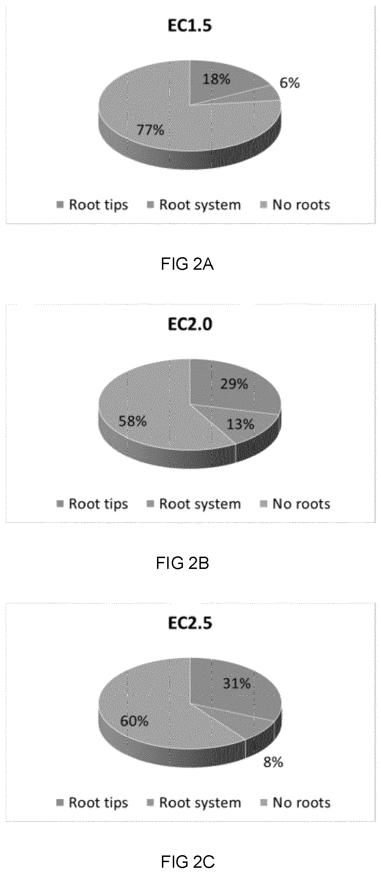

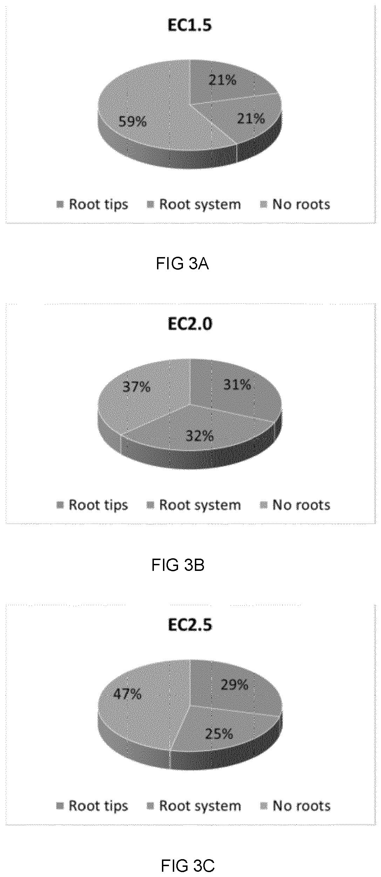

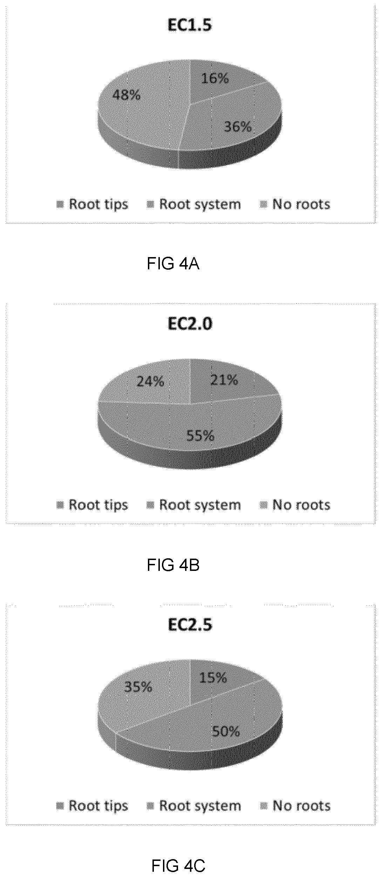

The substrates were analysed after 10 days, 12 days and 14 days and the results shown in Figures 2-4. Figures 2A-C shows the results after 10 days; Figures 3A-C show the results after 12 days; and Figures 4A-C show the results after 14 days.

The growth substrates were categorised after 10, 12 and 14 days according to the following:
□ No roots visible = no roots
□ 1 to 3 visible roots = root tips
□ 3 or more roots = root system

From the results in Figures 2-4, it can be seen that the growth substrates supplied a nutrient solution of EC=2.0 mS/cm had the highest percentage of roots systems and root tips after each stage.

Therefore, the data show that the effect of an EC value 1.6 to 2.4 mS/cm is an improvement in root development and the number of cuttings that can progress to the next growing stage.

## Claims

1. A method of propagating a cannabis cutting, comprising the steps of:
- providing a coherent growth substrate comprising man-made vitreous fibres (MMVF) bonded with a cured binder composition, wherein the growth substrate has a density in the range of 60 kg/m³ to 70 kg/m³ ;
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate.

2. The method according to claim 1, wherein the binder composition comprises:
a) a sugar component, and
b) a reaction product of a polycarboxylic acid component and an alkanolamine component,
wherein the binder composition prior to curing contains at least 42% by weight of the sugar component based on the total weight (dry matter) of the binder components.

3. The method according to claim 1 or 2, wherein the method lasts 2 to 3 weeks, most preferably less than 2 weeks.

4. The method according to any preceding claim, wherein the cannabis cutting inserted into the growth substrate is 10 to 14 days old when cut from a mother plant.

5. The method according to any preceding claim, wherein the cannabis cutting inserted into the growth substrate has a length of 8 to 15 cm, preferably 10 to 12 cm.

6. The method according to any preceding claim wherein the cannabis cutting inserted into the growth substrate has a stem diameter of 3 to 8 mm, preferably 5 mm.

7. The method according to any preceding claim, wherein the cannabis cutting is inserted into the growth substrate product such that the cutting is 5 to 10 mm below the top surface.

8. The method according to any preceding claim, wherein the growth substrate is in the shape of a cube.

9. The method according to any preceding claim, wherein the growth substrate has a density of 65 kg/m³.

10. The method according to any preceding claim, wherein the nutrient solution having an electrical conductivity (EC) value between 1.6 and 2.4 mS/cm is provided twice.

11. The method according to any preceding claim, comprising the additional step of saturating the growth substrate with nutrient solution having an electrical conductivity (EC) value between 1.6 and 2.4 mS/cm, preferably wherein this additional step occurs prior to inserting the cannabis cutting into the growth substrate.

12. The method according to claim 11, wherein the water content of the growth substrate product is maintained between 30 to 80% after the additional step of saturating the growth substrate product.

13. The method according to any preceding claim, wherein the growth substrate product comprises an alkyl ether sulphate surfactant anionic surfactant wetting agent.

14. The method according to any preceding claim, wherein the growth substrate does not comprise a seed hole.

15. Use of a coherent growth substrate for propagating a cannabis cutting, comprising the steps of :
- inserting the cannabis cutting into the growth substrate at a location where the growth substrate does not have a seed hole;
- providing a nutrient solution having an electrical conductivity (EC) value between 1.6 and 2.4 mS/cm to the cannabis cutting in the growth substrate;
wherein the coherent growth substrate comprises man-made vitreous fibres (MMVF) bonded with a cured binder composition; and wherein the growth substrate has a density in the range of 60 kg/m³ to 70 kg/m³.

16. The use according to claim 15, containing any of the additional features in claims 2 to 14.

## Patentansprüche

1. Verfahren zum Vermehren eines Cannabisstecklings, umfassend die Schritte:
- Bereitstellen eines kohärenten Wachstumssubstrats, umfassend künstliche Mineralfasern (KMF), die mit einer ausgehärteten Bindemittelzusammensetzung verbunden sind, wobei das Wachstumssubstrat eine Dichte im Bereich von 60 kg/m³ bis 70 kg/m³ aufweist;
- Einsetzen des Cannabisstecklings in das Wachstumssubstrat an einer Stelle, an der das Wachstumssubstrat kein Saatloch aufweist;
- Bereitstellen einer Nährlösung, die einen Wert der elektrischen Leitfähigkeit (EC-Wert) zwischen 1,6 und 2,4 mS/cm aufweist, an den Cannabissteckling im Wachstumssubstrat.

2. Verfahren nach Anspruch 1, wobei die Bindemittelzusammensetzung umfasst:
a) einen Zuckerbestandteil und
b) ein Reaktionsprodukt eines Polycarbonsäurebestandteils und eines Alkanolaminbestandteils,
wobei die Bindemittelzusammensetzung vor dem Aushärten mindestens 42 Gew-% des Zuckerbestandteils basierend auf dem Gesamtgewicht (Trockensubstanz) der Bindemittelbestandteile enthält.

3. Verfahren nach Anspruch 1 oder 2, wobei das Verfahren 2 bis 3 Wochen, besonders bevorzugt weniger als 2 Wochen, dauert.

4. Verfahren nach einem vorstehenden Anspruch, wobei der in das Wachstumssubstrat eingesetzte Cannabissteckling 10 bis 14 Tage alt ist, wenn er von einer Mutterpflanze abgeschnitten wird.

5. Verfahren nach einem vorstehenden Anspruch, wobei der in das Wachstumssubstrat eingesetzte Cannabissteckling eine Länge von 8 bis 15 cm, vorzugsweise 10 bis 12 cm, aufweist.

6. Verfahren nach einem vorstehenden Anspruch, wobei der in das Wachstumssubstrat eingesetzte Cannabissteckling einen Stieldurchmesser von 3 bis 8 mm, vorzugsweise 5 mm, aufweist.

7. Verfahren nach einem vorstehenden Anspruch, wobei der Cannabissteckling derart in das Wachstumssubstratprodukt eingesetzt wird, dass der Steckling 5 bis 10 mm unter der oberen Oberfläche ist.

8. Verfahren nach einem vorstehenden Anspruch, wobei das Wachstumssubstrat in der Form eines Würfels ist.

9. Verfahren nach einem vorstehenden Anspruch, wobei das Wachstumssubstrat eine Dichte von 65 kg/m³ aufweist.

10. Verfahren nach einem vorstehenden Anspruch, wobei die Nährlösung, die einen Wert der elektrischen Leitfähigkeit (EC-Wert) zwischen 1,6 und 2,4 mS/cm aufweist, zweimal bereitgestellt wird.

11. Verfahren nach einem vorstehenden Anspruch, umfassend den zusätzlichen Schritt des Sättigens des Wachstumssubstrats mit Nährlösung, die einen Wert der elektrischen Leitfähigkeit (EC-Wert) zwischen 1,6 und 2,4 mS/cm aufweist, wobei dieser zusätzliche Schritt vorzugsweise vor dem Einsetzen des Cannabisstecklings in das Wachstumssubstrat erfolgt.

12. Verfahren nach Anspruch 11, wobei der Wassergehalt des Wachstumssubstratprodukts nach dem zusätzlichen Schritt des Sättigens des Wachstumssubstratprodukts zwischen 30 bis 80 % gehalten wird.

13. Verfahren nach einem vorstehenden Anspruch, wobei das Wachstumssubstratprodukt ein Alkylethersulfattensid-anionisches Tensid-Benetzungsmittel umfasst.

14. Verfahren nach einem vorstehenden Anspruch, wobei das Wachstumssubstrat kein Saatloch umfasst.

15. Verwendung eines kohärenten Wachstumssubstrats zum Vermehren eines Cannabisstecklings, umfassend die Schritte:
- Einsetzen des Cannabisstecklings in das Wachstumssubstrat an einer Stelle, an der das Wachstumssubstrat kein Saatloch aufweist;
- Bereitstellen einer Nährlösung, die einen Wert der elektrischen Leitfähigkeit (EC-Wert) zwischen 1,6 und 2,4 mS/cm aufweist, an den Cannabissteckling im Wachstumssubstrat;
wobei das kohärente Wachstumssubstrat künstliche Mineralfasern (KMF), die mit einer ausgehärteten Bindemittelzusammensetzung verbunden sind, umfasst; und wobei das Wachstumssubstrat eine Dichte im Bereich von 60 kg/m³ bis 70 kg/m³ aufweist.

16. Verwendung nach Anspruch 15, die beliebige der zusätzlichen Merkmale in den Ansprüchen 2 bis 14 enthält.

## Revendications

1. Procédé de propagation d'une bouture de cannabis, comprenant les étapes de :
- fourniture d'un substrat de croissance homogène comprenant des fibres vitreuses artificielles (FVA) liées à une composition de liant durci, dans lequel le substrat de croissance présente une densité dans la plage de 60 kg/m³ à 70 kg/m³ ;
- insertion de la bouture de cannabis dans le substrat de croissance à un emplacement où le substrat de croissance ne présente pas de poquet ;
- fourniture d'une solution nutritive présentant une valeur de conductivité électrique (EC) comprise entre 1,6 et 2,4 mS/cm à la bouture de cannabis dans le substrat de croissance.

2. Procédé selon la revendication 1, dans lequel la composition de liant comprend :
a) un composant de sucre, et
b) un produit de réaction d'un composant d'acide polycarboxylique et d'un composant alcanolamine,
dans lequel la composition de liant, avant durcissement, contient au moins 42 % en poids du composant de sucre sur la base du poids total (matière sèche) des composants de liant.

3. Procédé selon la revendication 1 ou 2, dans lequel le procédé dure 2 à 3 semaines, le plus préférentiellement moins de 2 semaines.

4. Procédé selon une quelconque revendication précédente, dans lequel la bouture de cannabis insérée dans le substrat de croissance est âgée de 10 à 14 jours lorsqu'elle est coupée d'une plante mère.

5. Procédé selon une quelconque revendication précédente, dans lequel la bouture de cannabis insérée dans le substrat de croissance présente une longueur de 8 à 15 cm, de préférence 10 à 12 cm.

6. Procédé selon une quelconque revendication précédente, dans lequel la bouture de cannabis insérée dans le substrat de croissance présente un diamètre de tige de 3 à 8 mm, de préférence 5 mm.

7. Procédé selon une quelconque revendication précédente, dans lequel la bouture de cannabis est insérée dans le produit de substrat de croissance de sorte que la bouture soit 5 à 10 mm au-dessous de la surface supérieure.

8. Procédé selon une quelconque revendication précédente, dans lequel le substrat de croissance présente la forme d'un cube.

9. Procédé selon une quelconque revendication précédente, dans lequel le substrat de croissance présente une densité de 65 kg/m³.

10. Procédé selon une quelconque revendication précédente, dans lequel la solution nutritive présentant une valeur de conductivité électrique (EC) comprise entre 1,6 et 2,4 mS/cm est fournie deux fois.

11. Procédé selon une quelconque revendication précédente, comprenant l'étape supplémentaire de saturation du substrat de croissance avec une solution nutritive présentant une valeur de conductivité électrique (EC) comprise entre 1,6 et 2,4 mS/cm, de préférence dans lequel l'étape supplémentaire a lieu avant d'insérer la bouture de cannabis dans le substrat de croissance.

12. Procédé selon la revendication 11, dans lequel la teneur en eau du produit de substrat de croissance est maintenue entre 30 et 80 % après l'étape supplémentaire de saturation du produit de substrat de croissance.

13. Procédé selon une quelconque revendication précédente, dans lequel le produit de substrat de croissance comprend un agent mouillant tensioactif anionique de type tensioactif de sulfate d'alkyléther.

14. Procédé selon une quelconque revendication précédente, dans lequel le substrat de croissance ne comprend pas de poquet.

15. Utilisation d'un substrat de croissance homogène pour propager une bouture de cannabis, comprenant les étapes de :
- insertion de la bouture de cannabis dans le substrat de croissance en un emplacement où le substrat de croissance ne présente pas de poquet ;
- fourniture d'une solution nutritive présentant une valeur de conductivité électrique (EC) comprise entre 1,6 et 2,4 mS/cm à la bouture de cannabis dans le substrat de croissance ;
dans laquelle le substrat de croissance homogène comprend des fibres vitreuses artificielles (FVA) liées à une composition de liant durci ; et dans laquelle le substrat de croissance présente une densité dans la plage de 60 kg/m³ à 70 kg/m³.

16. Utilisation selon la revendication 15, contenant une quelconque des caractéristiques supplémentaires selon les revendications 2 à 14.
